# EUROPEAN PATENT APPLICATION

(11) **EP 4 726 869 A1**
(43) Date of publication of application: **15.04.2026**
(21) Application number: 25207060.2
(22) Date of filing: 06.10.2025
(51) Int. Cl.: H01M 50/107, H01M 50/188, H01M 50/193, H01M 50/559

(54) **CAN AND BATTERY CELL INCLUDING THE SAME**

(30) Priority: 10.10.2024 KR 20240137889; 11.09.2025 KR 20250130206
(71) Applicant: SK On Co., Ltd., Seoul 03161 (KR)
(72) Inventor: PARK, Seong Che, 34124 Daejeon (KR); KWAK, Seung Ho, 34124 Daejeon (KR)
(74) Representative: Stolmár & Partner Patentanwälte PartG mbB

(57) **Abstract**

A cell case (100) according to an embodiment of the present disclosure may include: a can (200) having a sidewall (220) and an end plate (210) having an internal space (S) accommodating an electrode assembly (400) formed therein; a cap plate (300) disposed opposite the end plate, coupled to the sidewall, and sealing the internal space; and an electrode terminal (500) extending externally by penetrating through a portion of the can, and the electrode terminal may be coupled to the end plate via an insulating resin member (R).

## Description

### TECHNICAL FIELD

The disclosure and implementations disclosed in this patent document generally relate to a can and a battery cell including the same.

### BACKGROUND

Secondary batteries are a type of energy storage device that may be recharged with and discharged of electricity. Secondary batteries are widely used in various devices that use electricity as a power source. For example, secondary batteries are used as energy storage devices in a variety of devices, from small devices like mobile phones, laptop computers, and tablets to large devices like cars and aircraft. Recently, secondary batteries have been actively explored as vehicle power sources.

Secondary batteries may be categorized into lead-acid batteries, nickel-cadmium batteries, nickel-metal hydride batteries, and lithium-ion batteries, depending on the electrode material. Each type of secondary battery may be appropriately selected based on design capacity, usage environment, and other factors. Lithium-ion batteries may achieve relatively high voltage and capacity as compared to other types of secondary batteries. Consequently, lithium-ion batteries are widely used in fields requiring high-density energy storage, such as vehicle battery packs.

Secondary batteries, such as lithium-ion batteries, are comprised primarily of cathode materials, anode materials, separators, and electrolytes. The cathode and anode materials are disposed with an insulating separator interposed therebetween, and charging or discharging may occur through the movement of ions through the electrolyte.

### SUMMARY

According to an aspect of the present disclosure, a cell case having an improved assembly process and a battery cell including the same may be provided.

A cell case of the present disclosure and a battery cell including the same may be widely applied in green technology fields such as electric vehicles, battery charging stations, and other battery-powered solar and wind power generation.

Furthermore, a cell case of the present disclosure and a battery cell including the same may be used in eco-friendly electric vehicles, hybrid vehicles, and other vehicles for ameliorating the effects of climate change by suppressing air pollution and greenhouse gas emissions.

A cell case according to an embodiment of the present disclosure may include: a can having a sidewall and an end plate having an internal space accommodating an electrode assembly formed therein; a cap plate disposed opposite the end plate, coupled to the sidewall, and sealing the internal space; and an electrode terminal extending externally by penetrating through a portion of the can, and the electrode terminal may be coupled to the end plate via an insulating resin member.

The insulating resin member may be injection-inserted between the electrode terminal and the end plate.

Each of the electrode terminal and the end plate may be surface-treated to increase bonding strength with the insulating resin member.

The end plate may have a through-hole into which a portion of the electrode terminal is inserted.

The electrode terminal may include: a first body portion disposed outside of the internal space; a second body portion disposed in the internal space; and a connecting body portion disposed in the through-hole and connecting the first body portion and the second body portion.

A diameter of the second body portion may be less than a diameter of the through-hole.

A diameter of the first body portion may be greater than a diameter of the through-hole.

A diameter of the connecting body portion may be less than a diameter of the second body portion.

A length of the connecting body portion may be longer than a thickness of the end plate.

The insulating resin member may surround at least a portion of a side surface of the first body portion.

A battery cell according to an embodiment of the present disclosure may include: an electrode assembly; and a cell case accommodating the electrode assembly, and the cell case may include: a can having a sidewall and an end plate having an internal space accommodating the electrode assembly formed therein; a cap plate disposed opposite the end plate, coupled to the sidewall, and sealing the internal space; and an electrode terminal having one end coupled to the electrode assembly and the other end extending externally by penetrating through a portion of the can, and the electrode terminal may be coupled to the end plate via an injection-inserted insulating resin member.

According to embodiments of the present disclosure, a cell case and a battery cell including the same may simplify a manufacturing process and improve productivity by manufacturing an electrode terminal and a can through insert injection molding.

According to embodiments of the present disclosure, a cell case and a battery cell including the same may omit gaskets and insulating insulators due to a resin insulator injected between an electrode terminal and a can, and may be expected to reduce costs and improve productivity due to a reduced number of parts.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to an embodiment of the present disclosure.
FIG. 2 is an exploded perspective view of a battery cell according to an embodiment of the present disclosure.
FIG. 3 is a cross-sectional view taken along line I-I' of FIG. 1.
FIG. 4 is an enlarged view of portion A of FIG. 3.
FIG. 5A and FIG. 5B are an enlarged view of portion B of FIG. 4.
FIG. 5C and FIG. 5D are an enlarged view of portion C of FIG. 4.
FIGS. 6 to 8 are views illustrating a process of manufacturing a cell case according to an embodiment of the present disclosure.
FIG. 9 is an exploded perspective view of a battery cell according to a comparative example.

### DETAILED DESCRIPTION

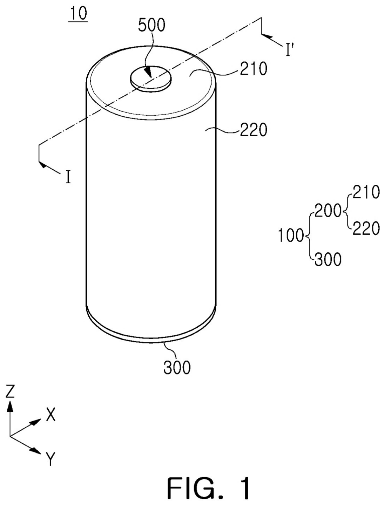

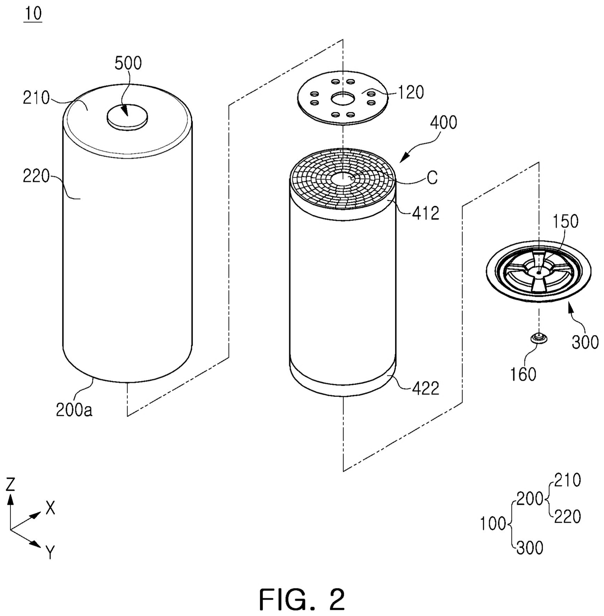

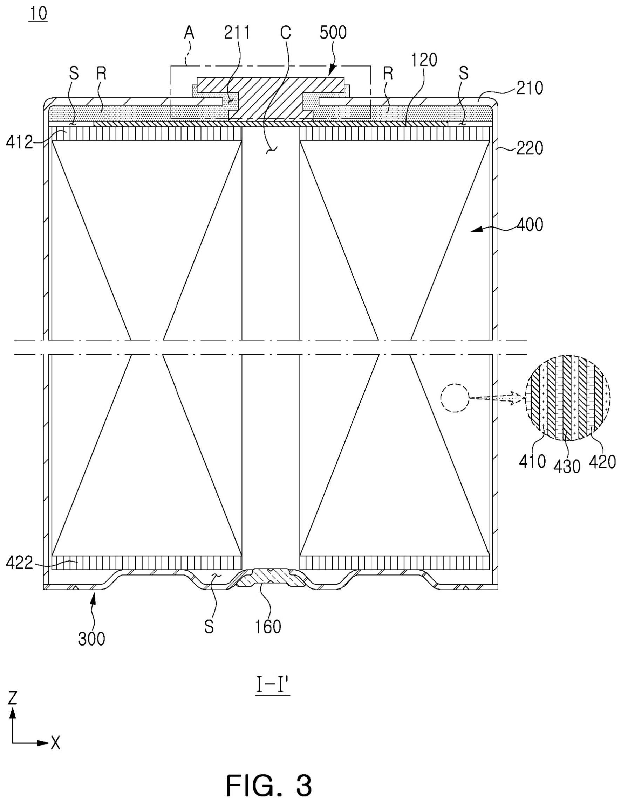

FIG. 1 is a perspective view of a battery cell 10 according to an embodiment of the present disclosure, FIG. 2 is an exploded perspective view of a battery cell 10 according to an embodiment of the present disclosure, and FIG. 3 is a cross-sectional view taken along line I-I' of FIG. 1.

Referring to FIGS. 1 to 3, a battery cell 10 according to an embodiment of the present disclosure may be provided with an electrode assembly 400, a can 200, and a cap plate 300 connected to the can 200, and may include a cell case 100 accommodating the electrode assembly 400 therein.

Here, the battery cell 10 according to the present disclosure may be configured as a cylindrical cell, but is not limited thereto. In the present disclosure, a cylindrical cell will be used as an example to describe the battery cell 10 according to an embodiment.

Referring to FIGS. 2 and 3, the cell case 100 may include a sidewall 220 having an internal space S formed therein, an end plate 210 provided in one end of the sidewall 220 in which both ends thereof are open and having a through-hole 211 formed therein, and a cap plate 300 provided in the other end of the sidewall 220 and having a liquid injection port 150 formed therein.

Here, the sidewall 220 having the internal space S formed therein and the end plate 210 provided in one end of the sidewall 220 in which both ends are open and having a through-hole 211 formed therein may be referred to as a can 200. That is, the cell case 100 may include the can 200 having the internal space S formed therein and the cap plate 300 connected to the can 200 to seal the internal space S together with the can 200.

Here, the end plate 210 and the cap plate 300 may be configured to be coupled to both ends of the sidewall 220 in which both ends are open, and at least one of the end plate 210 or the cap plate 300 may be integrally provided along with the sidewall 220.

Furthermore, in the cell case 100, the liquid injection port 150 may be provided in the end plate 210 or the through-hole 211 may be provided in the cap plate 300.

Here, the internal space S may be formed by the sidewall 220 of the cell case 100 and the cap plate 300, and the electrode assembly 400 and electrolyte may be accommodated in the internal space S.

The sidewall 220 may have a circular tube shape, and the end plate 210 may have an overall flat circular plate shape covering one side of the internal space S.

Here, thicknesses of the end plate 210 and the sidewall 220 may be variously changed. For example, the end plate 210 and the sidewall 220 may have the same thickness, and the end plate 210 may have a thickness greater than a thickness of the sidewall 220.

The cell case 100 may include a metal material such as aluminum or an aluminum alloy, but the present disclosure is not limited thereto, and the material of the cell case 100 may be variously changed.

Meanwhile, the sidewall 220 and the end plate 210 of the cell case 100 may be formed integrally.

For example, the sidewall 220 and the end plate 210 may be manufactured in an integrally formed shape by deep drawing a metal sheet.

When the sidewall 220 and the end plate 210 are formed integrally, since a process of bonding the sidewall 220 and the end plate 210 is not required, the manufacturing of the cell case 100 and/or the battery cell 10 may be facilitated, and workability may be improved.

However, the cell case 100 of the present disclosure is not limited to a configuration in which the sidewall 220 and the end plate 210 are formed integrally, and the sidewall 220 and the end plate 210 may also be manufactured separately and then coupled or bonded together by welding or other methods.

The end plate 210 may have a through-hole 211 into which a portion of an electrode terminal 500 is inserted. In other words, the end plate 210 may have the through-hole 211 externally exposing the electrode terminal 500 connecting the electrode assembly 400 to the outside.

The through-hole 211 may be provided for the coupling of the electrode terminal 500. The end plate 210 may have a circular cross-section, and the through-hole 211 may be formed in the center of the end plate 210. In this case, the electrode terminal 500 coupled to the through-hole 211 may be disposed in the center of the end plate 210.

Referring again to FIGS. 2 and 3, the electrode assembly 400 may be disposed in the internal space S (S) of the cell case 100.

The electrode assembly 400 may include a first electrode plate 410, a second electrode plate 420 and a separator 430. The first electrode plate 410 may be one of a cathode and an anode, and the second electrode plate 420 may correspond to the other of the cathode and the anode.

Each of the first electrode plate 410 and the second electrode plate 420 may include a current collector foil (or a metal foil) and a composite layer applied to at least one surface of the current collector foil. The composite layer may include an active material.

The separator 430 may be interposed between the cathode and the anode and may electrically insulate the cathode and the anode. The separator 430 may be disposed between the first electrode plate 410 and the second electrode plate 420 and may thus be configured to prevent electrical short-circuiting and to allow for generation of ion flow. For example, the separator 430 may include a porous polymer film or a porous nonwoven fabric.

The first electrode plate 410, the second electrode plate 420 and the separator 430 may be repeatedly disposed to form an electrode assembly 400.

As an example, the electrode assembly 400 may have a winding shape in which the first electrode plate 410, the separator 430 and the second electrode plate 420 are wound in a stacked state. However, the electrode assembly 400 is not limited to a winding structure. For example, the electrode assembly 400 may also have a stacking shape, a zigzag-folding shape, or a stack-folding shape.

The electrode assembly 400 may include a first electrode plate 410 and a second electrode plate 420 having different polarities. For example, the first electrode plate 410 may serve as a cathode and the second electrode plate 420 may serve as an anode, or vice versa.

The electrode assembly 400 may include a coated portion in which the first electrode plate 410 and the second electrode plate 420 are arranged with the separator 430 interposed therebetween, and non-coated portions 412 and 422 extending from the first electrode plate 410 and the second electrode plate 420.

Here, the coated portion may be coated with an active material, and the non-coated portions 412 and 422 may not be coated with the active material. Furthermore, the non-coated portions 412 and 422 may overlap each other in a predetermined shape or may have a bent shape.

The non-coated portions 412 and 422 may include a first non-coated portion 412 extending from the coated portion of the first electrode plate 410 and a second non-coated portion 422 extending from the coated portion of the second electrode plate 420.

The first non-coated portion 412 of the first electrode plate 410 is a portion to which the first electrode active material is not applied, and may be an exposed portion of the first electrode plate 410. The first non-coated portion 412 may function as a passageway for electrical connection to an adjacent member.

The second non-coated portion 422 of the second electrode plate 420 is a portion to which the second electrode active material is not applied, and may be an exposed portion of the second electrode plate 420. The second non-coated portion 422 may function as a passageway for electrical connection to an adjacent member.

Additionally, according to an embodiment of the present disclosure, in the electrode assembly 400, at least one of the first non-coated portion 412 or the second non-coated portion 422 may be provided with a plurality of segments. In other words, the non-coated portions 412 and 422 may include segments formed to be spaced apart from each other in a circumferential direction of the electrode assembly 400.

A core portion C, an empty space, may be formed in the center of the electrode assembly 400. The core portion C may be a hollow in which a winding shaft of the electrode assembly 400 is disposed.

The first non-coated portion 412 or the second non-coated portion 422 may provide an electrical connection path electrically connected to at least one of a current collector 120, the cap plate 300 or the sidewall 220.

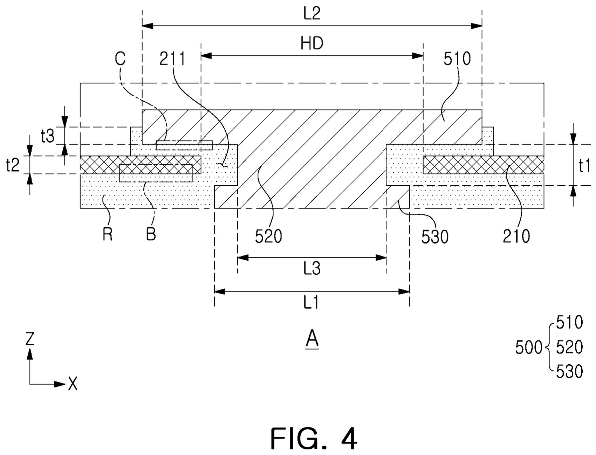

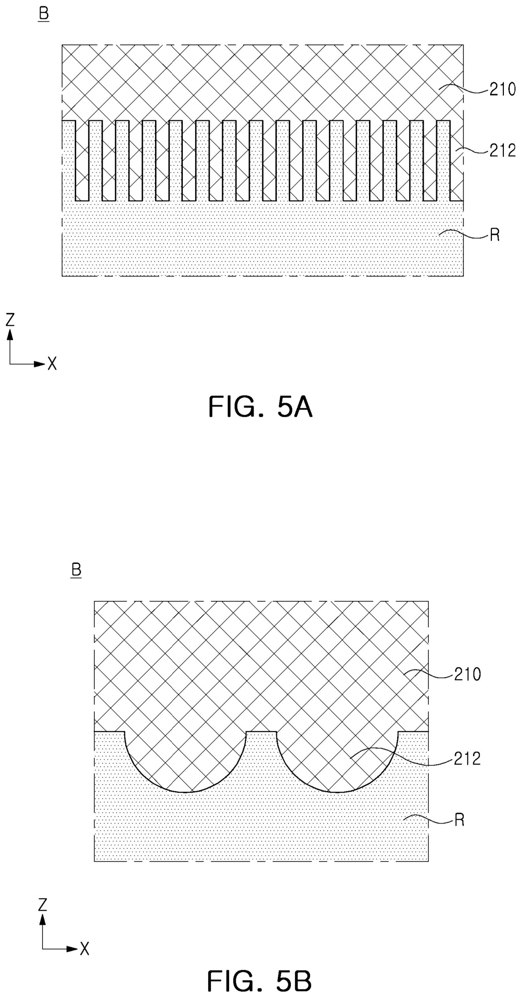

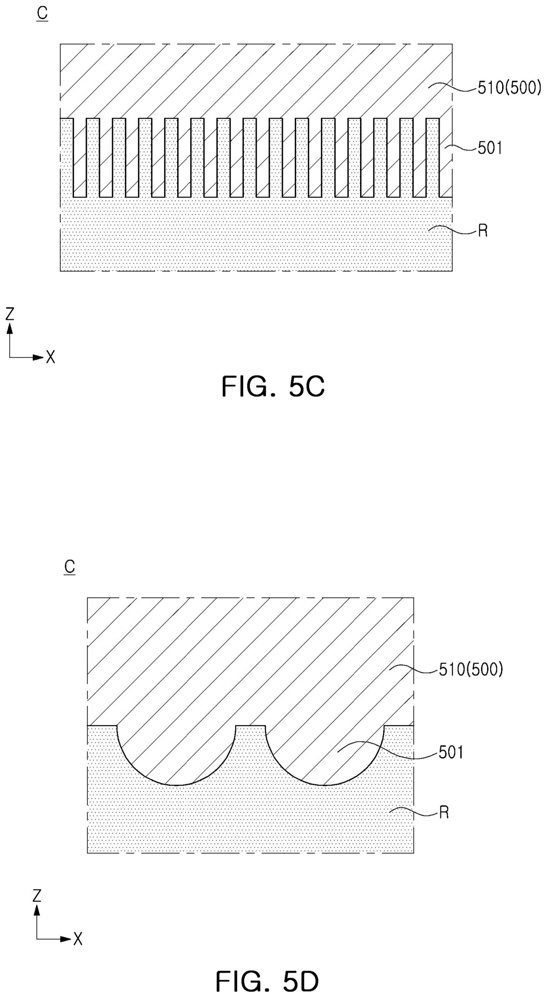

FIG. 4 is an enlarged view of portion A of FIG. 3, FIG. 5A and FIG. 5B are an enlarged view of portion B of FIG. 4, and FIG. 5C and FIG. 5D are an enlarged view of portion C of FIG. 4.

Referring to FIGS. 4 to 5A and 5D, the electrode terminal 500 will be described in more detail.

Referring to FIG. 4 along with FIGS. 1 to 3, the electrode assembly 400 may be connected to the current collector 120, and the current collector 120 may be welded to the electrode terminal 500 of the battery cell 10 and electrically connected to the electrode terminal 500.

The first non-coated portion 412 may be electrically connected to the electrode terminal 500 via the current collector 120. The first non-coated portion 412 may be electrically connected to the current collector 120.

For example, the first non-coated portion 412 and the current collector 120 may be electrically connected to each other by welding or the like, and the current collector 120 may be electrically connected to the electrode terminal 500 by welding or the like.

The second non-coated portion 422 may be electrically connected to at least one of the cap plate 300 or the sidewall 220. FIG. 3 illustrates that the second non-coated portion 422 may be directly electrically connected to the cap plate 300, it may also be possible for the current collector to be separately disposed between the second non-coated portion 422 and the cap plate 300.

The electrode terminal 500 may be coupled to the end plate 210 and may be electrically connected to the electrode assembly 400. The electrode terminal 500 may be coupled to the through-hole 211 of the end plate 210. At least a portion of the electrode terminal 500 may be exposed to the outside of the end plate 210.

The electrode terminal 500 according to an embodiment of the present disclosure may be connected to the end plate 210 via an insulating resin member R.

That is, the cell case 100 according to an embodiment of the present disclosure includes: a can 200 including a sidewall 220 and an end plate 210 having an internal space S accommodating an electrode assembly formed therein; a cap plate 300 disposed opposite the end plate 210, coupled to the sidewall 220 and sealing the internal space S; and an electrode terminal 500 extending externally through a portion of the can 200, and the electrode terminal 500 may be connected to the end plate 210 via the insulating resin member R.

Here, the insulating resin member R provided between the electrode terminal 500 and the end plate 210 may insulate the electrode terminal 500 and the end plate 210, and may seal a space between the electrode terminal 500 and the end plate 210, thereby preventing leakage of electrolyte or gas within the cell case 100.

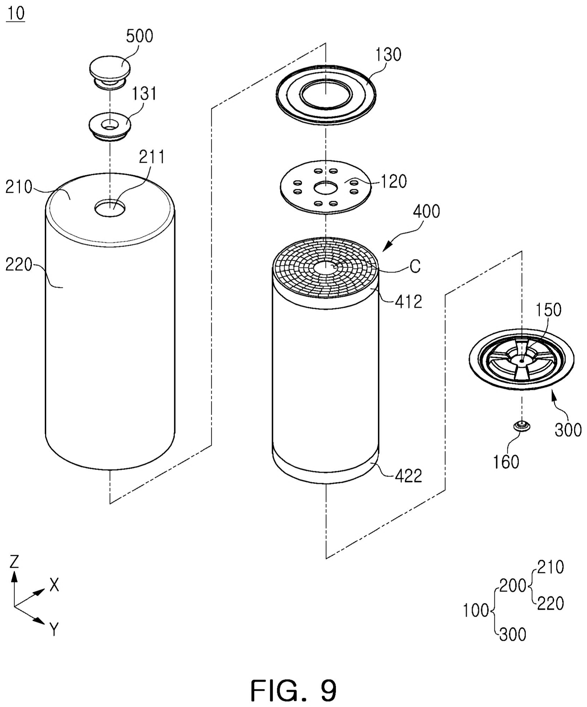

FIG. 9 is an exploded perspective view of a battery cell 10 according to a comparative example. Referring to FIG. 9, the battery cell 10 according to the comparative example may include a gasket 131 having electrically insulating properties and disposed between the electrode terminal 500 and the through-hole 211, and an insulating member 130.

The gasket 131 may be disposed between the electrode terminal 500 and the end plate 210 for the purpose of insulation between the electrode terminal 500 and the end plate 210. The gasket 131 may include an electrically insulating material. The gasket 131 may function as a sealing member sealing the space between the electrode terminal 500 and the end plate 210.

In order to ensure electrical insulation between the current collector and the end plate 210, an insulating member 130 having electrically insulating properties may be disposed between the current collector and the end plate 210.

Meanwhile, in the cell case 100 according to an embodiment of the present disclosure, the electrode terminal 500 may be coupled to the end plate 210 via the insulating resin member R, so that the gasket 131 and the insulating member 130 may be omitted.

Accordingly, a process of assembling the gasket 131 and the insulating member 130 may be omitted, thereby simplifying a manufacturing process and improving productivity.

Referring back to FIG. 4, an electrode terminal 500 according to an embodiment of the present disclosure may include: a first body portion 510 disposed outside of the internal space S; a second body portion 530 disposed within the internal space S; and a connecting body portion 520 disposed within the through-hole 211 and connecting the first body portion 510 and the second body portion 530.

Here, the first body portion 510, the second body portion 530 and the connecting body portion 520 may be integrally provided.

Furthermore, the first body portion 510, the second body portion 530 and the connecting body portion 520 may have a circular cross-section.

The first body portion 510 may be formed to have a larger cross-section than the second body portion 530, and the connecting body portion 520 may be formed to have a smaller cross-section than the first body portion 510 and the second body portion 530.

In other words, a diameter L3 of the connecting body portion 520 may be less than a diameter L2 of the first body portion 510. Furthermore, the diameter L3 of the connecting body portion 520 may be less than a diameter L1 of the second body portion 530.

The diameter L3 of the connecting body portion 520 provided between the first body portion 510 and the second body portion 530 may be formed to be less than the diameter L2 of the first body portion 510 and the diameter L1 of the second body portion 530, so that a sufficient insulating resin member R may be disposed between the connecting body portion 520 disposed in the through-hole 211 and the end plate 210.

As described above, the connecting body portion 520 may be formed to be inserted between the first body portion 510 and the second body portion 530, thereby improving bonding strength between the electrode terminal 500 and the insulating resin member R.

The diameter L2 of the first body portion 510 may be formed to be greater than the diameter L1 of the second body portion 530.

Here, the diameter L1 of the second body portion 530 may be less than a diameter HD of the through-hole 211.

The diameter L1 of the second body portion 530 may be made less than the diameter HD of the through-hole 211, so that the end plate 210 including the through-hole 211 may be inserted from the second body portion 530 toward the first body portion 510, thereby facilitating the manufacturing process.

Meanwhile, since the insulating resin member R is formed to cover an inner surface of the end plate 210 to be greater than the diameter HD of the through-hole 211, even if the diameter L1 of the second body portion 530 is formed to be less than the diameter HD of the through-hole 211, the electrode terminal 500 may not deviate from the through-hole 211.

Additionally, the diameter L2 of the first body portion 510 may be greater than the diameter HD of the through-hole 211. Accordingly, the first body portion 510 may be supported by the end plate 210 so that the electrode terminal 500 is not inserted into the end plate 210.

A length t1 of the connecting body portion 520 may be longer than a thickness t2 of the end plate 210.

The connecting body portion 520 may be provided to be longer than the thickness t2 of the end plate 210, so that a sufficient insulating resin member R may be disposed between the end plate 210, the first body portion 510 and the second body portion 530.

Additionally, the insulating resin member R may surround at least a portion of a side surface of the first body portion 510.

That is, the insulating resin member R may surround a side surface of the first body portion 510 by a predetermined height t3, thereby improving insulation properties between the first body portion 510 and the end plate 210.

Referring to FIGS. 5A and 5D, the electrode terminal 500 and the end plate 210 according to an embodiment of the present disclosure may each be surface-treated to increase the bonding strength with the insulating resin member R.

For example, the electrode terminal 500 and the end plate 210 may each be surface-treated to increase a contact area with the insulating resin member R on a surface in contact with the insulating resin member R.

Referring to FIG. 5A, the insulating resin member R may be disposed on a surface of the end plate 210 facing the electrode assembly 400, and the surface of the end plate 210 facing the electrode assembly 400 may be surface-treated (212).

For example, micro-protrusion portions may be formed on a portion of a surface of the end plate 210. The micro-protrusion portions may be provided radially between the through-hole 211 of the end plate 210 and an outer periphery, and the micro-protrusion portions may also be provided in a circumferential between the through-hole 211 of the end plate 210 and an outer periphery, or may be provided in both a radial shape and a circumferential direction.

Furthermore, referring to FIG. 5B, micro-dimples may be formed on a portion of a surface of the end plate 210. A contact area between the end plate 210 and the insulating resin member R may be increased through the protruding micro-dimples, like embossing.

Here, the micro-protrusion portions and the micro-dimples may be formed in the electrode terminal 500 and the end plate 210 through at least one of press processing, shot blasting, laser processing or chemical etching.

The surface treatment may increase a contact area between the insulating resin member R and the end plate 210, and may improve the bonding strength between the end plate 210 and the insulating resin member R.

Similarly, referring to FIG. 5C and FIG. 5D, in the electrode terminal 500, a surface with which the insulating resin member R is in contact may be surface-treated (501).

For example, a portion of the surface of the electrode terminal 500 may include micro-protrusion portions or micro-dimples that increase a contact area with the insulating resin member R.

The surface treatment may increase a contact area between the insulating resin member R and the electrode terminal 500, and may improve the bonding strength between the electrode terminal 500 and the insulating resin member R.

The electrode terminal 500 and the end plate 210 may secure a sufficient contact area with the insulating resin member R through the surface treatment, and may improve the bonding strength with an insulating resin member R, a heterogeneous member.

However, a surface treatment method is not limited to this, and various surface treatment methods may be applied to enhance the bonding strength between the electrode terminal 500 and the end plate 210, which are formed of metal, and the insulating resin member R.

For example, the electrode terminal 500 and the end plate 210 may be subject to a surface treatment of applying a polyvinyl alcohol (PVA) binder after a chromium (Cr) film treatment.

Through the chromium (Cr) film treatment, a film layer formed of chromium hydroxide (Cr(OH)₃) or chromium oxide (Cr₂O₃) may be formed on surfaces of the electrode terminal 500 and the end plate 210. Here, the chromium film layer may enhance the chemical activity of the metal surface, thereby improving the interfacial bonding with the injection-inserted insulating resin member R.

Furthermore, the insulating resin member R may include PP-g-MA in which a polypropylene-based resin is grafted with maleic anhydride, and may be manufactured by blending polyphenylene sulfide (PPS) and a glass fiber-reinforced polymer (GF polymer) along therewith.

PP-g-MA may enhance adhesion through chemical interaction with the chromium (Cr) film layer formed on a metal surface.

Accordingly, the insulating resin member R including PP-g-MA into the electrode terminal 500 having a chromium film layer or a chromium oxide film formed therein and the end plate 210 may be injection-inserted, thereby significantly improving the chemical and mechanical bonding strength between the metal surface and the resin.

Here, a process of forming the chromium film layer (Cr(OH)₃) or the chromium oxide film (Cr₂O₃) may be performed in the following order: an electrolytic degreasing process, a rinsing process, a chromium film formation process using a chromium component-containing immersion treatment, a rinsing process, a post-treatment immersion process using a non-chromium component, a rinsing process and a drying process.

Here, the post-treatment immersion process may further include an operation of applying a PVA binder (e.g., a polymer-based organic film-forming agent) to a surface and forming a surface coating layer. Corrosion resistance may be ensured and durability improved through PVA binder coating.

Furthermore, the electrode terminal 500 and the end plate 210 may be subject to a surface treatment imparting amine groups (e.g., -(CH₂)₃-NH₂) to the surface by utilizing 3-aminopropyltriethoxysilane (APTES) as a silane coupling agent.

The insulating resin member R may be injection-inserted after imparting carboxyl groups (e.g., -COOH) to polyphenylene sulfide (PPS) and glass fiber reinforced polymer (GF polymer).

Through this process, the amine groups of the electrode terminal 500 and end plate 210 and the carboxyl groups of the insulating resin member R may form amide bonds (-CO-NH-), thereby enhancing the interfacial bonding strength between the electrode terminal 500 and end plate 210, and the insulating resin member R.

Here, a process of forming amine groups on the surfaces of the electrode terminal 500 and the end plate 210 using 3-aminopropyltriethoxysilane (APTES) may be performed in the following order: an electrolytic degreasing process, a rinsing process, an acid treatment using a nitric acid (HNO₃) solution or a sodium hydroxide (NaOH) solution, an immersion treatment process using a 1 to 2% of a 3-aminopropyltriethoxysilane (APTES) solution (ethanol or water mixture), a rinsing process and a drying process.

Furthermore, the electrode terminal 500 and the end plate 210 may be subject to a surface treatment imparting epoxy groups (e.g., -C-O-C-) to the surface by utilizing γ-Glycidoxypropyltrimethoxysilane (GPTMS) as a silane coupling agent.

The insulating resin member R may be injection-inserted after adding carboxyl groups (e.g., -COOH) to polyphenylene sulfide (PPS) and glass fiber reinforced polymer (GF polymer), from which the epoxy groups of the electrode terminal 500 and the end plate 210 and the carboxyl groups of the insulating resin member R may form bonds (e.g., -COO-CH₂-CH(OH)-), thereby enhancing interfacial bonding strength.

Here, a process of forming epoxy groups on the surfaces of the electrode terminal 500 and the end plate 210 by utilizing 3-glycidoxypropyltrimethoxysilane (GPTMS) as a silane coupling agent may be performed in the following order: an electrolytic degreasing process, a rinsing process, an acid treatment process using a nitric acid (HNO₃) solution or a sodium hydroxide (NaOH) solution, an immersion treatment process using a mixture of 3-glycidoxypropyltrimethoxysilane (GPTMS) and ethanol or water, a rinsing process and a drying process.

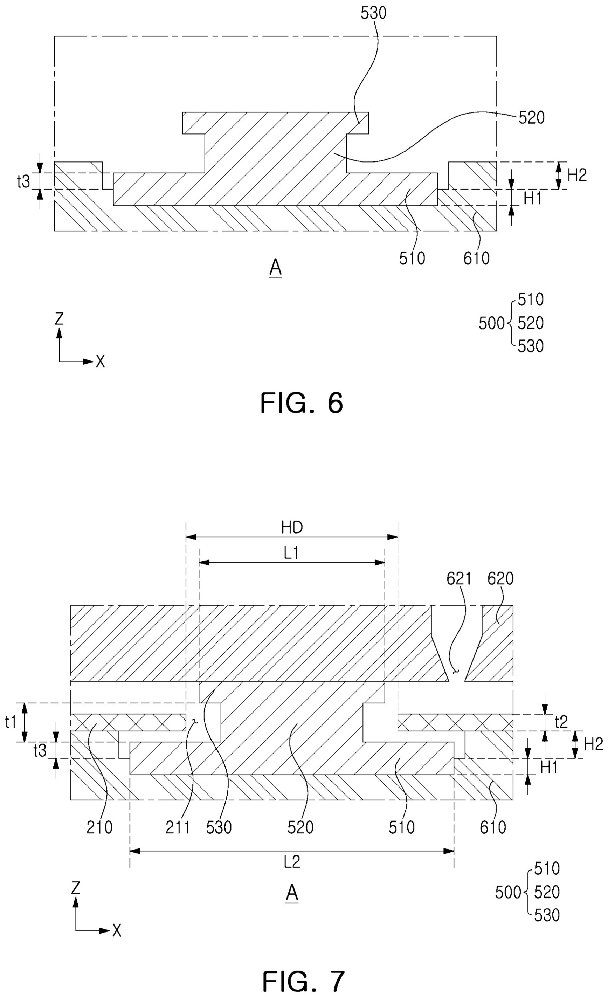

FIGS. 6 to 8 are views exemplarily illustrating a process of manufacturing a cell case 100 according to an embodiment of the present disclosure.

The cell case 100 according to an embodiment of the present disclosure may be manufactured by performing injection-inserting the insulating resin member R between the electrode terminal and the end plate 210.

That is, the insulating resin member R may be injection-inserted between the electrode terminal 500 and the end plate 210.

The process of manufacturing the cell case 100 according to an embodiment of the present disclosure will be described in more detail with reference to FIGS. 6 to 8.

Referring to FIG. 6, the electrode terminal 500 may be seated in a lower mold 610.

Here, the electrode terminal 500 may be disposed so that a portion of the first body portion 510 is in contact with and is inserted into the lower mold 610. More specifically, the first body portion 510 may be inserted into and in contact with the lower mold 610 to a first depth H1.

The lower mold 610 may form an area greater than that of the first body portion 510 from the first depth H1 into which the first body portion 510 is inserted, and may protrude upwardly by a second height H2.

Here, the second height H2 may be greater than the height t3 at which a side surface of the first body portion 510 is in contact with the insulating resin member R.

Referring to FIG. 7, by protruding upwardly by the second height H2, the lower mold 610 may enable the injected insulating resin member R to be coupled to the side surface of the first body portion 510, thus forming a space between the end plate 210 and the electrode terminal 500 into which the insulating resin member R may be injected, and supporting the end plate 210.

The second height of the lower mold 610 may be determined so that the end plate 210 is disposed on a side surface of the connecting body portion 520.

For example, the sum of a thickness t2 of the end plate 210 and the second height H2 may be set to be less than the sum of the height t3 at which the side surface of the first body portion 510 is in contact with the insulating resin member R and the length t1 of the connecting body portion 520.

Here, a thickness of the first body portion 510 may be the sum of the first depth H1 and the height t3 at which the side surface of the first body portion 510 is in contact with the insulating resin member R.

Furthermore, the diameter L1 of the second body portion 530 may be provided to be less than the diameter HD of the through-hole 211 of the end plate 210.

Accordingly, even in a state in which the electrode terminal 500 is seated in the lower mold 610, the end plate 210 may be lowered by allowing the second body portion 530 to penetrate through the through-hole 211 and may be seated in the lower mold 610, thereby facilitating the manufacturing process.

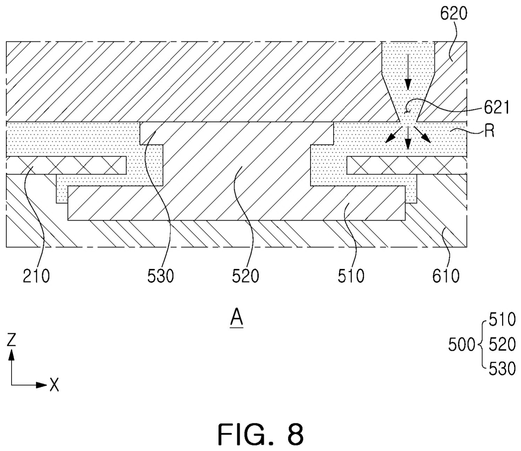

Referring to FIGS. 7 and 8, an upper mold 620 may be in contact with the second body portion 530 to secure a space into which the insulating resin member R may be injected between the end plate 210 and the upper mold 620.

Furthermore, the upper mold 620 may include an injection port 621 through which the insulating resin member R may be injected in a position that does not interfere with the second body portion 530.

The injection port 621 may be a passage connecting a space formed by the upper mold 620, the lower mold 610, the electrode terminal 500 and the end plate 210 from the outside of the upper mold 620. Through the injection port 621, the insulating resin member R may be filled into the space formed by the upper mold 620, the lower mold 610, the electrode terminal 500 and the end plate 210.

According to an embodiment of the present disclosure, the cell case 100 and the battery cell 10 including the same may be manufactured by injection-inserting the electrode terminal and the can 200, thereby simplifying the manufacturing process and improving productivity.

Furthermore, due to the resin insulator injected between the electrode terminal and the can 200, the gasket and the insulating insulator may be omitted, and cost reduction and productivity improvement may be expected due to a decrease in the number of components.

The present disclosure also relates to the following aspects.

Aspect 1) A cell case, comprising: a can having a sidewall and an end plate having an internal space accommodating an electrode assembly formed therein; a cap plate disposed opposite the end plate, coupled to the sidewall, and sealing the internal space; and an electrode terminal extending externally by penetrating through a portion of the can, wherein the electrode terminal is coupled to the end plate via an insulating resin member.

Aspect 2) The cell case of aspect 1, wherein the insulating resin member is injection-inserted between the electrode terminal and the end plate.

Aspect 3) The cell case of aspect 1 or 2, wherein each of the electrode terminal and the end plate are surface-treated to increase bonding strength with the insulating resin member.

Aspect 4) The cell case of any one of aspects 1 to 3, wherein the end plate has a through-hole into which a portion of the electrode terminal is inserted.

Aspect 5) The cell case of aspect 4, wherein the electrode terminal includes: a first body portion disposed outside of the internal space; a second body portion disposed in the internal space; and
a connecting body portion disposed in the through-hole and connecting the first body portion and the second body portion.

Aspect 6) The cell case of aspect 5, wherein a diameter of the second body portion is less than a diameter of the through-hole.

Aspect 7) The cell case of aspect 5 or 6, wherein a diameter of the first body portion is greater than a diameter of the through-hole.

Aspect 8) The cell case of any one of aspects 5 to 7, wherein a diameter of the connecting body portion is less than a diameter of the second body portion.

Aspect 9) The cell case of any one of aspects 5 to 8, wherein a length of the connecting body portion is longer than a thickness of the end plate.

Aspect 10) The cell case of any one of aspects 5 to 9, wherein the insulating resin member surrounds at least a portion of a side surface of the first body portion.

Aspect 11) A battery cell, comprising: an electrode assembly; and a cell case accommodating the electrode assembly, wherein the cell case includes: a can having a sidewall and an end plate having an internal space accommodating the electrode assembly formed therein; a cap plate disposed opposite the end plate, coupled to the sidewall, and sealing the internal space; and an electrode terminal having one end coupled to the electrode assembly and the other end extending externally by penetrating through a portion of the can, wherein the electrode terminal is coupled to the end plate via an injection-inserted insulating resin member.

## Claims

1. A cell case, comprising:
a can having a sidewall and an end plate having an internal space accommodating an electrode assembly formed therein;
a cap plate disposed opposite the end plate, coupled to the sidewall, and sealing the internal space; and
an electrode terminal extending externally by penetrating through a portion of the can,
wherein the electrode terminal is coupled to the end plate via an insulating resin member.

2. The cell case of claim 1, wherein the insulating resin member is injection-inserted between the electrode terminal and the end plate.

3. The cell case of claim 1 or 2, wherein each of the electrode terminal and the end plate are surface-treated to increase bonding strength with the insulating resin member.

4. The cell case of any one of claims 1 to 3, wherein the end plate has a through-hole into which a portion of the electrode terminal is inserted.

5. The cell case of claim 4, wherein the electrode terminal includes:
a first body portion disposed outside of the internal space;
a second body portion disposed in the internal space; and
a connecting body portion disposed in the through-hole and connecting the first body portion and the second body portion.

6. The cell case of claim 5, wherein a diameter of the second body portion is less than a diameter of the through-hole.

7. The cell case of claim 5 or 6, wherein a diameter of the first body portion is greater than a diameter of the through-hole.

8. The cell case of any one of claims 5 to 7, wherein a diameter of the connecting body portion is less than a diameter of the second body portion.

9. The cell case of any one of claims 5 to 8, wherein a length of the connecting body portion is longer than a thickness of the end plate.

10. The cell case of any one of claims 5 to 9, wherein the insulating resin member surrounds at least a portion of a side surface of the first body portion.

11. A battery cell, comprising:
an electrode assembly; and
a cell case accommodating the electrode assembly,
wherein the cell case includes:
a can having a sidewall and an end plate having an internal space accommodating the electrode assembly formed therein;
a cap plate disposed opposite the end plate, coupled to the sidewall, and sealing the internal space; and
an electrode terminal having one end coupled to the electrode assembly and the other end extending externally by penetrating through a portion of the can,
wherein the electrode terminal is coupled to the end plate via an injection-inserted insulating resin member.
